# EUROPÄISCHE PATENTSCHRIFT

(11) **EP 1 949 491 B1**
(45) Veröffentlichungstag und Bekanntmachung des Hinweises auf die Patenterteilung: **06.07.2011**
(21) Anmeldenummer: 06818496.9
(22) Anmeldetag: 13.11.2006
(51) Int. Cl.: H01P 5/107, G01F 23/284

(54) **HOHLLEITERÜBERGANG**
WAVEGUIDE JUNCTION
JONCTION DE GUIDES D'ONDES

(30) Priorität: 14.11.2005 DE 102005054233; 14.11.2005 US 736460 P
(43) Veröffentlichungstag der Anmeldung: 30.07.2008
(73) Patentinhaber: VEGA Grieshaber KG, 77709 Wolfach (DE)
(72) Erfinder: SCHULTHEISS, Daniel, 78132 Hornberg (DE)
(74) Vertreter: Kopf, Korbinian Paul
(86) Internationale Anmeldenummer: PCT/EP2006/010863
(87) Internationale Veröffentlichungsnummer: WO 2007/054355

(56) Entgegenhaltungen:
- EP-A- 1 592 082
- EP-A2- 0 874 415
- WO-A-01/88488
- WO-A-2004/008569
- JP-A- 2003 174 263
- US-A- 5 770 981
- US-B1- 6 870 438

## Beschreibung

### Technisches Gebiet

Die vorliegende Erfindung betrifft die Füllstandmessung. Insbesondere betrifft die vorliegende Erfindung ein Füllstandradar zur Bestimmung eines Füllstands in einem Tank.

### Hintergrund der Erfindung

Bekannte Füllstandmessgeräte, welche sich elektromagnetischer Wellen zur Messung der Füllstände bedienen, weisen eine Elektronik auf, welche die elektromagnetischen Wellen erzeugt. Die erzeugten elektromagnetischen Wellen werden dann beispielsweise mit Hilfe eines Koaxialleiters zur Antenne geleitet und über eine entsprechende Kopplungseinrichtung in die Antenne eingekoppelt.

Aus US 2003/141940 A1 und US 2003/168674 A1 sind beispielhaft zwei Mikrostrip-Hohlleiterübergänge genannt, bei denen jeweils das Hochfrequenzsubstrat zusammen mit einem Koppelelement in einen Hohlleiter hineinragt. Bei beiden Schriften muss jedoch der Hohlleiter auf der anderen Seite der Leiterplatte mit einem Resonator geschlossen werden. Dieser Resonator muss sehr genau ausgerichtet werden.

WO 01/88488 A1 beschreibt ein Füllstandsmessgerät mit einer Hohlleitereinkopplung in Form einer Platine und eines darauf angebrachten elektrisch leitfähigen Körpers, welche in den Hohlleiter hineinragen.

US 5,770,981 beschreibt ein Substrat, in welches eine Leitung mit einer sich daran anschließenden Mikrowellenäntenne eingebettet ist.

EP 1 592 082 A1 beschreibt einen Mikrostreifenleiter-Hohlleiter-Übergang.

Um die Abmessungen der Anordnung zu verringern (bei identischer Bündelung der von der Antenne ausgesendeten Strahlung), ist es wünschenswert, die Frequenz der erzeugten elektromagnetischen Wellen zu erhöhen. Hierdurch steigen allerdings auch die Anforderungen an die Elektronik, welche die elektromagnetischen Wellen erzeugt, als auch an die Empfangs- und Auswerteeinheiten. Insbesondere ist es hierbei wichtig, eine saubere Ein- bzw. Auskopplung der zu sendenden bzw. empfangenen elektromagnetischen Wellen in bzw. aus dem Hohlleiter, welche die Antenne mit der Elektronik verbindet, zu erreichen.

### Darstellung der Erfindung

Es ist eine Aufgabe der vorliegenden Erfindung, eine verbesserte Aus- bzw. Einkopplung einer Hochfrequenzwelle von einem Leiter in einen Hohlleiter bereitzustellen.

Die Erfindung ist in den Ansprüchen definiert.

Gemäß der vorliegenden Erfindung ist ein Füllstandradar mit einem Hohlleiterübergang angegeben, der Hohlleiterübergang umfassend eine Mehrschicht-Leiterplatte, eine Zuleitung zum Leiten elektromagnetischer Wellen, und eine Auskoppeleinheit, umfassend ein Koppelelement und einen Resonanzraum, zum Auskoppeln der elektromagnetischen Wellen aus der Zuleitung in einen Hohlleiter, wobei der Resonanzraum in der Leiterplatte integriert ist.

Demzufolge weist also der Hohlleiterübergang eine Kopplungsvorrichtung auf, welche in der Leiterplatte integral eingebettet ist. Es ist kein externer Resonator erforderlich. Vielmehr findet die Auskopplung der elektromagnetischen Wellen aus der Zuleitung in den Hohlleiter direkt innerhalb der Leiterplatte statt. Durch die Integration der Auskoppeleinheit in der Leiterplatte kann eine integrale Fertigung der Auskoppeleinheit während dem Fertigungsprozess bzw. Bearbeitungsprozess der Leiterplatte stattfinden. Da kein externer Resonator für die Auskoppeleinheit vorgesehen ist, ergeben sich hier auch keine Probleme mit mechanischen Toleranzen, welche bei einer Anbringung des Resonators an die Leiterplatte auftreten könnten.

Die Leiterplatte weist mehrere Leitungsebenen auf, welche über elektrische Durchführungen miteinander verbunden sind und kann entsprechende elektronische Bauelemente tragen.

Gemäß der vorliegenden Erfindung umfasst die Leiterplatte eine erste Schicht und eine zweite Schicht, wobei die Auskoppeleinheit in der ersten Schicht integriert ist, wobei die zweite Schicht ein isolierendes Material aufweist, und wobei die zweite Schicht über der ersten Schicht angeordnet ist, so dass sie die Auskoppeleinheit abdeckt.

Gemäß der vorliegenden Erfindung umfasst der Hohlleiterübergang weiterhin eine dritte Schicht, die zwischen der ersten Schicht und der zweiten Schicht angeordnet ist, wobei die erste Schicht als isolierendes Leiterplatten-Substratmaterial ausgerührt ist, und wobei die dritte Schicht eine dünne Metallisierung ist.

Gemäß der vorliegenden Erfindung ist das isolierende Leiterplatten-Substratmaterial, in welchem sich der Resonator der Auskoppeleinheit befindet, mit einer Metallisierung überzogen. Auf dieser Metallisierung ist dann plattenmäßig die zweite Schicht angeordnet. Hierdurch wird ein Sandwich aus Leiterplatten-Substrat und zweiter Schicht gebildet, zwischen denen eine Metallisierung angeordnet ist. Diese Metallisierung dient einerseits als Massefläche für eine Mikrostripleitung auf der zweiten Schicht andererseits als Hohlleiterwand in dem Resonator der Auskoppeleinheit.

Die erste Schicht kann metallisch sein. Dies ist allerdings kein Ausführungsbeispiel der Erfindung.

In diesem Fall ist keine Metallisierung in Form einer dritten Schicht erforderlich.

Gemäß einem weiteren Ausführungsbeispiel der vorliegenden Erfindung ist die Auskoppeleinheit als Koppelelement in Verbindung mit einem Resonator ausgeführt.

Bei dem Resonator kann es sich um einen Hohlraum in der ersten Schicht handeln, welcher beispielsweise durch einen Ätzprozess, durch einen Fräsprozess oder Bohrprozess oder dergleichen erzeugt wird.

Gemäß einem weiteren Ausführungsbeispiel der vorliegenden Erfindung weist der Resonator eine Tiefe auf, welche einer Dicke der ersten Schicht entspricht.

In diesem Fall kann der Hohlraum des Resonators beispielsweise einfach aus der ersten Schicht herausgebohrt werden (in Form einer Durchbohrung der ersten Schicht) oder die erste Schicht kann einfach vollständig durchgeätzt werden.

Gemäß einem weiteren Ausführungsbeispiel der vorliegenden Erfindung ist die zweite Schicht ein Hochfrequenz-Substrat.

Hierbei kann es sich beispielsweise um Rogers RT Duroid handeln. Somit ist es möglich, Hochfrequenzwellen, welche sich innerhalb der zweiten Schicht ausbreiten, in den Resonator einzukoppeln, so dass sie dann im Weiteren in den (z.B. externen) Hohlleiter eingekoppelt werden können.

Gemäß einem weiteren Ausführungsbeispiel der vorliegenden Erfindung ist die erste Schicht ein Hochfrequenz-Substrat.

Gemäß einem weiteren Ausführungsbeispiel der vorliegenden Erfindung der Resonator mit einem Dielektrikum gefüllt.

Gemäß einem weiteren Ausführungsbeispiel der vorliegenden Erfindung weist die zweite Schicht im Bereich der Auskoppeleinheit eine Durchführung auf, um einen Druckausgleich zwischen dem Resonator und der Umgebung bereitzustellen.

Somit kann ein Aufplatzen des Multilayers vermieden werden, wenn hohe Temperaturschwankungen auftreten sollten, welche andernfalls zu enormen Druckunterschieden zwischen dem Resonatorinneren und der Umgebung führen könnten.

Gemäß einem weiteren Ausführungsbeispiel der vorliegenden Erfindung ist die Zuleitung im Wesentlichen in der zweiten Schicht integriert.

Auf diese Weise ist es möglich, sowohl die Auskoppeleinheit als auch die Zuleitung integral während dem Fertigungsprozess der Trägerplatte auszubilden. Eine mechanische Justage zwischen Auskoppeleinheit und Zuleitung ist in diesem Falle nicht notwendig, da beide ja bereits in der Trägerplatte fest integriert sind.

Gemäß einem weiteren Ausführungsbeispiel der vorliegenden Erfindung ist die Zuleitung als Mikrostrip ausgeführt.

Gemäß einem weiteren Ausführungsbeispiel der vorliegenden Erfindung ist die Zuleitung zum Leiten elektromagnetischer Wellen mit einer Frequenz zwischen 60 GHz und 100 GHz ausgeführt, wobei die Auskoppeleinheit zum Auskoppeln der elektromagnetischen Wellen mit einer Frequenz zwischen 60 GHz und 100 GHz aus der Zuleitung in den Hohlleiter ausgeführt ist.

Somit ist eine Auskopplung hochfrequenter elektromagnetischer Wellen aus einer Leiterplatte in einen Hohlleiter angegeben, welche auch noch für Frequenzen von über 60 GHz ausgerührt ist, ohne dass dabei Probleme mit mechanischen Toleranzen oder einer Justage auftreten.

Gemäß einem weiteren Ausführungsbeispiel der vorliegenden Erfindung ist der Hohlleiterübergang integral in einem Platinenfertigungsprozess gefertigt.

Gemäß der vorliegenden Erfindung ist ein Füllstandradar angegeben, welcher zur Bestimmung eines Füllstands in einem Tank ausgeführt ist, umfassend eine Antenne zum Aussenden und/oder Empfangen von elektromagnetischen Wellen, eine Speisevorrichtung zum Speisen der Antenne mit den elektromagnetischen Wellen, wobei die Speisevorrichtung weiterhin einen Hohlleiter zum Transport der elektromagnetischen Wellen zwischen der Antenne und der Zuleitung aufweist, und wobei die Speisevorrichtung einen oben beschriebenen Hohlleiterübergang aufweist.

Ein derartiges Füllstandradar weist keinen externen Resonator auf, um die erzeugten Hochfrequenzwellen in den Hohlleiter einzukoppeln. Vielmehr ist der Resonator direkt in der Leiterplatte integriert. Hierdurch werden Toleranzprobleme einer Montage des Resonantors vermieden. Außerdem wird die Anzahl der mechanischen Teile verringert, was wiederum zu einem Montageaufwand führt. Insbesondere ist ein derartiges Füllstandradar auch für Hochfrequenzstrahlung über 60 GHz geeignet.

Gemäß einem weiteren Ausführungsbeispiel der vorliegenden Erfindung ist der Hohlleiter durch ein Befestigungsmittel derart mit der Trägerplatte verbunden, dass die elektromagnetischen Wellen über die Auskoppeleinheit von der Zuleitung in den Hohlleiter auskoppelbar sind.

Weiterhin ist ein Verfahren zum Fertigen eines derartigen Hohlleiterübergangs angegeben, welches nicht in den Schutzbereich der Patentansprüche fällt und bei dem eine erste Schicht bereitgestellt wird, ein Resonator in der ersten Schicht zum Auskoppeln von elektromagnetischen Wellen aus einer Zuleitung in einen Hohlleiter ausgebildet wird, eine zweite Schicht ausgebildet wird, und die Zuleitung im Wesentlichen in der zweiten Schicht zum Leiten der elektromagnetischen Wellen ausgebildet wird, wobei der Resonator in der ersten Schicht integriert ist.

Hierdurch wird ein Verfahren bereitgestellt, durch das eine integrale Fertigung des Hohlleiterübergangs während dem Prozess einer Leiterplattenfertigung bereitgestellt wird. Der Resonator ist hierbei integraler Bestandteil der Leiterplatte.

Gemäß einem weiteren Beispiel weist das Verfahren weiterhin ein Ausbilden einer dritten Schicht auf, welche zwischen der ersten Schicht und der zweiten Schicht angeordnet ist, wobei die erste Schicht als isolierendes Leiterplatten-Substratmaterial ausgerührt ist, und wobei die dritte Schicht metallisch ist.

Gemäß einem weiteren Beispiel umfasst das Ausbilden der Auskoppeleinheit einen Ätzschritt, einen Frässchritt, oder einen Laserbohrschritt, welcher ggf. von einem Metallisierungsschritt gefolgt wird.

Weitere Ausführungsbeispiele, Aufgaben und Vorteile der Erfindung ergeben sich aus den Unteransprüchen.

Im Folgenden werden mit Verweis auf die Figuren bevorzugte Ausführungsbeispiele der vorliegenden Erfindung beschrieben.
Fig. 1 zeigt eine schematische Querschnittsdarstellung eines Hohlleiterübergangs gemäß einem Ausführungsbeispiel der vorliegenden Erfindung.
Fig. 2 zeigt eine schematische Querschnittsdarstellung eines Hohlleiterübergangs.
Fig. 3 zeigt eine schematische Draufsicht auf einen Hohlleiterübergang gemäß einem Ausführungsbeispiel der vorliegenden Erfindung.
Fig. 4 zeigt eine schematische Darstellung eines Füllstandradars gemäß einem weiteren Ausführungsbeispiel der vorliegenden Erfindung.
Fig. 5 zeigt beispielhaft den Stand der Technik.

Die Darstellungen in den Figuren sind schematisch und nicht maßstäblich. In der folgenden Figurenbeschreibung werden für die gleichen oder ähnlichen Elemente die gleichen Bezugsziffern verwendet.

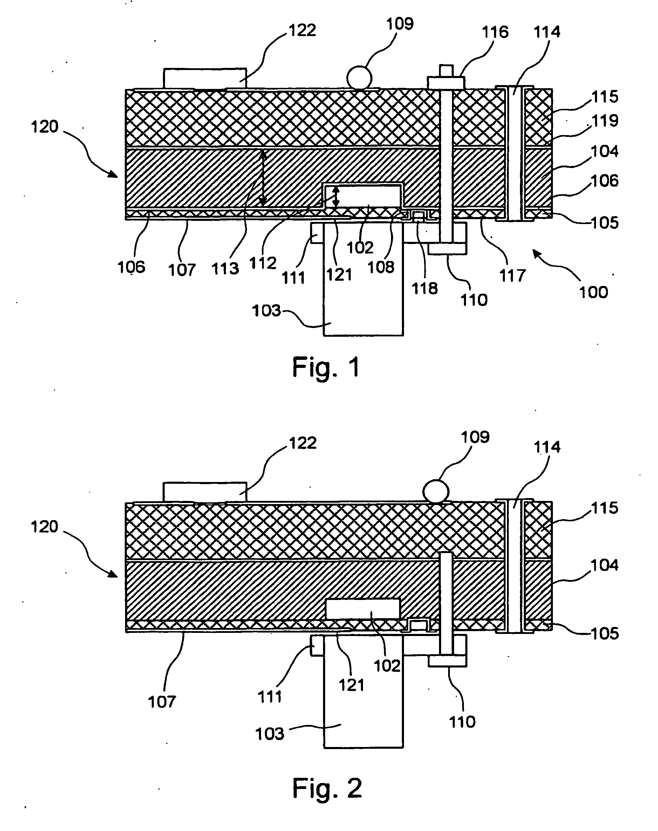

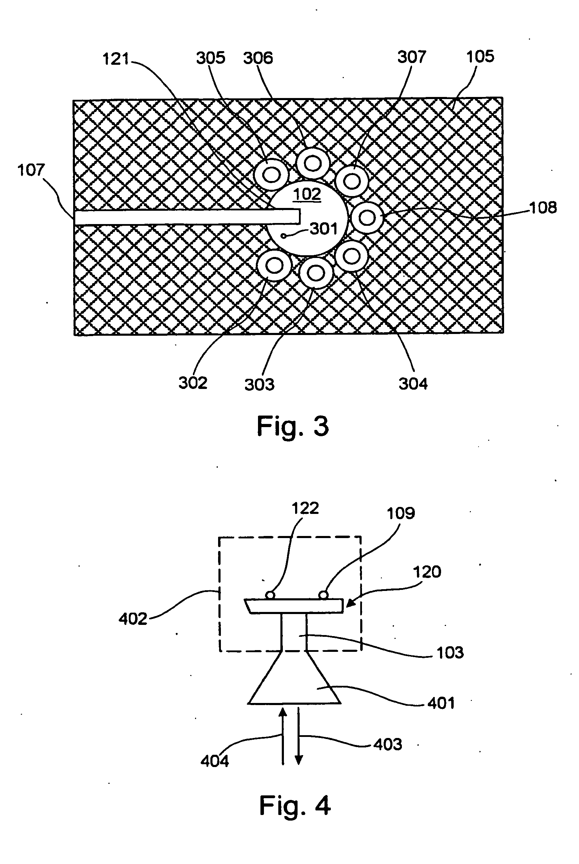

Fig. 1 zeigt eine schematische Querschnittsdarstellung eines Hohlleiterübergangs für ein Füllstandradar gemäß einem Ausführungsbeispiel der vorliegenden Erfindung. Wie in Fig. 1 zu erkennen, weist der Hohlleiterübergang 100 im Wesentlichen eine Leiterplatte 120, bestehend aus mehreren Lagen (104, 105, 115), auf, in welche ein Resonanzraum 102 eingebettet ist. Auf der unteren Seite der Leiterplatte 120 ist eine Schicht aus Hochfrequenzsubstrat 105 plattenartig angeordnet. Auf dem HF-Substrat 105 befindet sich eine Mikrostripleitung 107 (siehe hierzu auch Fig. 3) zum Transport der elektromagnetischen Wellen von einer Signalquelle (nicht gezeigt in Fig. 1) zum Koppelelement 121. Das Koppelelement 121 ist z.B. eine Verlängerung der Mikrostripleitung 107, die in den Hohlleiter bestehend aus dem Hohlleiterstück 103 und dem Resonanzraum 102 führt.

Die Zuleitung 107 kann aber beispielsweise auch als Strip-Line oder innerhalb einer Triplate ausgeführt sein. Bei der Triplate befindet sich die Zuleitung 107 in der inneren Schicht.

An das Hochfrequenzsubstrat 105, bei dem es sich beispielsweise um Rogers RT Duroid handeln kann oder um Teflon oder ein anderes isolierendes Material, ist ein Hohlleiter 103 angeschlossen. Der Hohlleiter kann hierbei auf das Substrat 105 aufgeklebt sein. Oder aber er kann, wie in Fig. 1 dargestellt, mit Befestigungsmitteln 110, 111 mit dem Hohlleiterübergang 100 verschraubt, vernietet, verbolzt oder anderweitig befestigt sein. Im vorliegenden Fall handelt es sich bei dem Befestigungsmittel 111 um einen Flansch, welcher fest mit dem Hohlleiter verbunden ist. Bei dem Befestigungsmittel 110 handelt es sich beispielsweise um eine Schraube, welche durch das Sandwich 120 führt und rückseitig mit einer entsprechenden Mutter 116 arretiert ist.

Der Resonanzraum 102 weist eine Tiefe 112 auf, welche beispielsweise zwischen 0,5 und 0,8 mm liegt. Diese Dimensionierung (welche beispielhaft gewählt ist) mag einer Frequenz von 60 bis 80 GHz, oder gar 100 GHz oder 120 GHz oder mehr entsprechen. Geht man zu höheren Frequenzen über, kann die Dimensionierung des Resonators natürlich kleiner ausfallen.

Der Resonanzraum wird beispielsweise durch eine Fräsung oder Bohrung gefertigt. Geht man zu kleinen Dimensionen über, kommen insbesondere auch Ätzverfahren in Frage, wie sie im Platinenfertigungsprozess oder in der Halbleiter-Prozessierungstechnik angewendet werden. Insbesondere durch fotolithografische Strukturierungs- und Ätzverfahren lassen sich Dimensionen im Mikrometerbereich oder darunter erreichen.

Eine weitere Möglichkeit zur Fertigung des Resonators ist das Laser-Bohren, bei dem mittels eines Laserstrahls Leiterplattenmaterial abgetragen wird.

Während der Fertigung des Hohlleiterübergangs 100 wird der Resonanzraum 102 in die Leiterplattenschicht 104 eingebracht. Bei der Leiterplattenschicht 104 kann es sich beispielsweise um glasfaserverstärktes Epoxidharzgewebe (z.B. FR-4) handeln. Besteht die Leiterplattenschicht 104 aus einem isolierenden Material, so ist eine Metallisierung 106 auf der Unterseite der Leiterplattenschicht 104 vorgesehen, welche nach Aussparung des Resonanzraumes 102 angebracht werden kann. Danach wird dann das Hochfrequenzsubstrat 105 aufgeklebt, welches beispielsweise eine Dicke von 0,127 mm aufweist. Natürlich sind auch andere Dicken möglich, je nach Anforderungen bzw. Frequenz der elektromagnetischen Wellen.

Gemäß einem Ausführungsbeispiel der vorliegenden Erfindung entspricht die Tiefe 112 des Resonanzraumes der Dicke 113 der Leiterplattenschicht 104. Im vorliegenden Fall ist die Tiefe 112 des Resonanzraumes geringer als die Dicke 113 der Leiterplattenschicht 104. Der Durchmesser des Resonanzraumes 102 entspricht beispielsweise dem Durchmesser des Hohlleiters 103.

Weiterhin ist eine Durchkontaktierung (via) 108 vorgesehen, welche die metallische Schicht 106 zwischen HF-Substrat 105 und Leiterplattenschicht 104 durch das HF-Substrat 105 hindurch mit seiner Unterseite 117 verbindet. Diese Durchkontaktierung 108 ist beispielsweise kreisförmig ausgeführt. Natürlich sind auch andere Querschnitte möglich. Weiterhin kann die Durchkontaktierung 108 zur Justage des Hohlleiters 103 verwendet werden. Hierfür mag der Hohlleiter 103 einen Passstift 118 aufweisen, welcher in die Aussparung der Durchkontaktierung 108 eingreift. Ein solcher Passstift 118 ist aber nicht erforderlich.

Der Hohlleiterübergang ist aus einer Leiterplatte 120 entstanden, welche als Mehrschicht-Leiterplatte (Multilayer) ausgeführt ist. Die Mehrschicht-Leiterplatte umfasst hierbei die den Resonanzraum 102 tragende Leiterplattenschicht 104 und eine darüber angeordnete Leiterplattenschicht 115, welche beispielsweise aus dem selben Material, z. B. FR-4, ausgeführt ist. Zwischen den beiden Leiterplattenschichten 104, 115 ist beispielsweise eine metallische Lage 119 angebracht. Weiterhin kann eine Durchkontaktierung 114 (via) vorgesehen sein, welche die Oberseite der oberen Leiterplattenschicht 115 mit der Metallisierung auf der Unterseite des HF-Substrats 105 und/oder den inneren Lagen 119 bzw. 106 leitend verbindet.

Auf der Oberseite der Leiterplattenschicht 115 können elektronische Bauteile 122, 109 angeordnet sein, bei denen es sich beispielsweise um eine Auswerteelektronik oder aber auch um die Elektronik für die Erzeugung der Hochfrequenzwellen handelt.

Das HF-Substrat 105 kann derart ausgeführt sein, dass es den Resonanzraum 102 vollständig abdeckt. Hierdurch wird der Resonanzraum insbesondere vor Verschmutzungen geschützt. Es können aber auch eine oder mehrere Luftauslässe 301 (siehe Fig. 3) vorgesehen sein, um einen Luftausgleich zwischen dem Resonanzraum 102 und der Umgebung oder dem Inneren des Hohlleiters 103 zu ermöglichen.

Weiterhin kann der Resonanzraum mit einem geeigneten Dielektrikum (z.B. Teflon oder Leiterplattenmaterial) aufgefüllt werden.

Fig. 2 zeigt eine schematische Querschnittsdarstellung eines Hohlleiterübergangs. Der Übergang, der in Fig. 2 gezeigt ist, entspricht im Wesentlichen dem Übergang der Fig. 1. Allerdings ist die Schicht 104 hier nicht als isolierende Leiterplatte, sondern als Metallplatte ausgeführt, welche eine Ausfräsung für den Resonanzraum 102 aufweist.

Aufgrund der metallischen, stromleitenden Ausführung der Platte 104 ist keine metallische Lage 106 zwischen Platte 104 und HF-Substrat 105 erforderlich. Die Befestigungsschraube 110 kann direkt mit der Metallplatte 104 verschraubt sein, oder anderweitig an der Metallplatte 104 befestigt sein. Eine Durchführung der Befestigungsschraube 110 durch die gesamte Multilayerleiterplatte 120 ist nicht erforderlich.

Fig. 3 zeigt eine schematische Darstellung eines Hohlleiterübergangs gemäß einem Ausführungsbeispiel der vorliegenden Erfindung in Draufsicht. Wie in Fig. 3 zu erkennen, weist der Mikrostrip-Hohlleiterübergang eine Zuleitung auf, welche durch die streifenartige Metallisierung 107 auf der Unterseite des HF-Substrats 105 als Mikrostreifenleitung ausgeführt ist. Diese Zuleitung dient der Leitung elektromagnetischer hochfrequenter Wellen von einer Signalquelle zum Koppelelement 121 und dem Resonanzraum 102 (und zurück).

Weiterhin sind Durchkontaktierungen 108, 302, 303, 304, 305, 306, 307 vorgesehen, welche mindestens die beiden Metallisiemngsebenen auf der Ober- und Unterseite des Hochfrequenzsubstrats 105 miteinander verbinden. Diese Durchkontaktierungen können auch durch die gesamte Leiterplatte gehen und somit mehrere Metallisierungslagen (z.B. 105, 119) miteinander verbinden. Diese Durchkontaktierungen 108, 302 bis 307 können beispielsweise kreisartig ausgeführt sein, und sind vorteilhafter Weise zusätzlich noch für Justagezwecke des Hohlleiters 103 verwendbar. Hierfür können am Hohlleiter 103 entsprechende Passstifte 118 angebracht sein. Dies ist aber nicht zwingend erforderlich, da der Hohlleiter 103 auch anderweitig justiert werden kann.

Weiterhin ist in Fig. 3 eine Bohrung 301 zu erkennen, welche einem Luftausgleich zwischen Resonanzraum und Umgebung bzw. Hohlleiter dient.

Die Dimensionierung des Mikrostrip-Hohlleiterübergangs kann für Frequenzen von beispielsweise 60 bis 100 GHz ausgelegt sein. Ohne weiteres kann der erfindungsgemäße Mikrostrip-Hohlleiterübergang auch für höhere Frequenzen ausgeführt sein, indem die Dimensionen entsprechend verkleinert werden.

Fig. 4 zeigt eine schematische Darstellung eines Füllstandradars gemäß einem Ausführungsbeispiel der vorliegenden Erfindung. Der Füllstandradar, welcher zur Bestimmung eines Füllstands in einem Tank vorgesehen ist, umfasst hierbei eine Antenne 401 zum Aussenden bzw. Empfangen von elektromagnetischen Wellen 403, 404, und eine Speisevorrichtung 402 zum Speisen der Antenne mit den elektromagnetischen Wellen. Die Speisevorrichtung weist u. a. einen Hohlleiter 103 zum Transport der elektromagnetischen Wellen 403, 404 zwischen der Antenne 401 und der Zuleitung 107 auf. Weiterhin weist die Speisevorrichtung 402 einen Mikrostrip-Hohlleiterübergang auf, wie er in den Fig. 1 bis 3 beschrieben ist.

Die Antenne 401 kann beispielsweise als Homantenne oder als Parabolantenne ausgeführt sein.

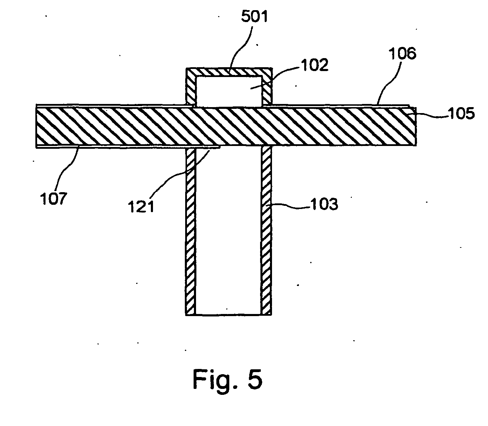

In Fig. 5 ist ein bekannter Übergang von einer Mikrostripleitung 107 auf einen Hohlleiter 103 dargestellt. Die von der Mikrostripleitung geführte Hochfrequenz gelangt über das Koppelelement 121 in den Hohlleiter 103 der einseitig mit dem Resonator 102 abgeschlossen ist. Der Resonator ist beispielsweise als Deckel 501 mit einem Sackloch als Resonanzraum ausgeführt. Dieser Deckel 501 wird nun entweder auf die Leiterplatte 105 aufgeschraubt, geklebt, geklemmt oder in einer anderen Art und Weise befestigt. Dabei ist auf eine exakte Ausrichtung der Deckelöffnung und der Hohlleiteröffnung zu achten. Gleichzeitig muss die Leiterplatte exakt positioniert werden. Ein weiterer Nachteil dieser Anordnung besteht darin, dass auf der Rückseite der Leiterplatte 105 im Bereich des Deckels 501 keine Bauteile platziert werden können.

Ergänzend sei darauf hingewiesen, dass "umfassend" keine anderen Merkmale oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandradar zur Bestimmung eines Füllstands in einem Tank, das Füllstandradar umfassend:
eine Antenne (401) zum Aussenden und / oder Empfangen von elektromagnetischen Wellen (403; 404);
eine Speisevorrichtung (402) zum Speisen der Antenne (401) mit den elektromagnetischen Wellen (403; 404);
wobei die Speisevorrichtung (402) einen Hohlleiter (103) zum Transport der elektromagnetischen Wellen (403; 404) zwischen der Antenne (401) und einer Zuleitung (107) aufweist; und
wobei die Speisevorrichtung (402) einen Hohlleiterübergang zur Auskopplung von elektromagnetischen Wellen aus der Zuleitung in den Hohlleiter aufweist, **dadurch gekennzeichnet, dass** der Hohlleiterilbergang umfasst:
eine Leiterplatte (120), wobei die Leiterplatte (120) eine erste Schicht (104), eine zweite Schicht (105) und die Zuleitung (107) auf der Unterseite oder innerharlb der zweiten Schicht (105) zum Leiten elektromagnetischer Wellen umfasst;
eine Auskoppeleinheit umfassend ein Koppelelement (121) und einen Resonanzraum (102) zum Auskoppeln der elektromagnetischen Wellen aus der Zuleitung (107) in den Hohlleiter (103);
wobei der Resonanzraum (102) als Aussparung in der ersten Schicht (104) integriert ist;
wobei die zweite Schicht (105) ein isolierendes Material aufweist;
wobei die erste Schicht (104) aus einem isolierenden Material besteht und wobei auf einer Unterseite der ersten Schicht (104) eine Metallisierung (106) in Form einer dritten Schicht vorgesehen ist, die als Massefläche für die Zuleitung (107) und als Hohlleiterwand in dem Resonanzraum (102) dient und die zwischen der ersten Schicht (104) und der zweiten Schicht (105) angeordnet ist;
wobei die zweite Schicht (105) unter der ersten Schicht (104) angeordnet ist, so dass sie den Resonanzraum (102) abdeckt.

2. Füllstandradar nach Anspruch 1,
wobei der Resonanzraum (102) eine Tiefe (112) aufweist, die einer Dicke (113) der ersten Schicht (104) entspricht.

3. Füllstandradar nach einem der Ansprüche 1 bis 2,
wobei die zweite Schicht (105) ein Hochfrequenz-Substrat ist.

4. Füllstandradar nach einem der Ansprüche 1 bis 3,
wobei die erste Schicht (104) ein Hochfrequenz-Substrat ist.

5. Füllstandradar nach einem der Ansprüche 1 bis 2,
wobei der Resonanzraum (102) mit einem Dielektrikum gefüllt ist.

6. Füllstandradar nach einem der Ansprüche 1 bis 5,
wobei die zweite Schicht (105) im Bereich der Auskoppeleinheit eine Durchführung (301) aufweist, um einen Druckausgleich zwischen dem Resonanzraum (102) und der Umgebung bereitzustellen.

7. Füllstandradar nach einem der Ansprüche 1 bis 6,
wobei die Zuleitung (107) im wesentlichen in der zweiten Schicht (105) integriert ist.

8. Füllstandradar nach einem der vorhergehenden Ansprüche,
wobei die Zuleitung (107) als Mikrostrip ausgeführt ist.

9. Füllstandradar nach einem der vorhergehenden Ansprüche,
wobei die Zuleitung (107) zum Leiten elektromagnetischer Wellen mit einer Frequenz zwischen 60 Gigahertz und 100 Gigahertz ausgeführt ist; und
wobei die Auskoppeleinheit zum Auskoppeln der elektromagnetischen Wellen mit einer Frequenz zwischen 60 Gigahertz und 100 Gigahertz aus der Zuleitung in den Hohlleiter (103) ausgeführt ist.

10. Füllstandradar nach einem der vorhergehenden Ansprüche,
wobei der Hohlleiter (103) durch ein Befestigungsmittel (110; 111) derart mit der Leiterplatte (120) verbunden ist, dass die elektromagnetischen Wellen (403; 404) über die Auskoppeleinheit, umfassend den Resonator (102) und das Koppelelement (121), von der Zuleitung (107) in den Hohlleiter (103) auskoppelbar sind.

11. Füllstandradar nach einem der vorhergehenden Ansprüche,
wobei der HohUeiterübergang integral in einem Platinenfertigungsprozess gefertigt ist.

## Claims

1. A filling level radar for determining a filling level in a tank, with the filling level radar comprising:
an antenna (401) for transmitting and/or receiving electromagnetic waves (403; 404);
a feeding device (402) for feeding the electromagnetic waves (403; 404) to the antenna (401);
wherein the feeding device (402) comprises a waveguide (103) for conveying the electromagnetic waves (403; 404) between the antenna (401) and a supply line (107); and
wherein the feeding device (402) comprises a waveguide junction for decoupling electromagnetic waves from the supply line to the waveguide, **characterised in that** the waveguide junction comprises:
a printed circuit board (120), wherein the printed circuit board (120) comprises a first layer (104), a second layer (105) and the supply line (107) on the underside or within the second layer (105) for guiding the electromagnetic waves;
a decoupling unit comprising a coupling element (121) and a resonance space (102) for decoupling the electromagnetic waves from the supply line (107) to the waveguide (103);
wherein the resonance space (102) is integrated as a recess in the first layer (104);
wherein the second layer (105) comprises an insulating material;
wherein the first layer (104) comprises an insulating material and wherein on an underside of the first layer (104) metallisation (106) in the form of a third layer is provided, which metallisation (106) serves as a ground plane for the supply line (107) and as a waveguide wall in the resonance space (102) and which metallisation (106) is arranged between the first layer (104) and the second layer (105);
wherein the second layer (105) is arranged below the first layer (104) so that it covers the resonance space (102).

2. The filling level radar according to claim 1,
wherein the resonance space (102) comprises a depth (112) that corresponds to a thickness (113) of the first layer (104).

3. The filling level radar according to one of claims 1 to 2,
wherein the second layer (105) is a high-frequency substrate.

4. The filling level radar according to any one of claims 1 to 3,
wherein the first layer (104) is a high-frequency substrate.

5. The filling level radar according to one of claims 1 to 2,
wherein the resonance space (102) has been filled with a dielectric material.

6. The filling level radar according to any one of claims 1 to 5,
wherein the second layer (105) in the region of the decoupling unit comprises a leadthrough (301) in order to provide a pressure balance between the resonance space (102) and the surrounding area.

7. The filling level radar according to any one of claims 1 to 6,
wherein the supply line (107) is essentially integrated in the second layer (105).

8. The filling level radar according to any one of the preceding claims,
wherein the supply line (107) is designed as a microstrip.

9. The filling level radar according to any one of the preceding claims,
wherein the supply line (107) is designed for guiding electromagnetic waves with a frequency of between 60 gigahertz and 100 gigahertz; and
wherein the decoupling unit is designed for decoupling the electromagnetic waves with a frequency of between 60 gigahertz and 100 gigahertz from the supply line to the waveguide (103).

10. The filling level radar according to any one of the preceding claims,
wherein the waveguide (103) by means of a fastening means (110; 111) is connected to the printed circuit board (120) in such a manner that the electromagnetic waves (403; 404) can be decoupled, by way of the decoupling unit which comprises the resonator (102) and the coupling element (121), from the supply line (107) to the waveguide (103).

11. The filling level radar according to any one of the preceding claims,
wherein the waveguide junction is integrally manufactured in a printed-circuit-board manufacturing process.

## Revendications

1. Radar de niveau pour la détermination d'un niveau dans un réservoir, le radar de niveau comprenant :
une antenne (401) pour l'émission et/ou la réception d'ondes électromagnétiques (403 ; 404) ;
un dispositif d'alimentation (402) pour alimenter l'antenne (401) en ondes électromagnétiques (403 ; 404) ;
le dispositif d'alimentation (402) présentant un guide d'ondes (103) pour le transport des ondes électromagnétiques (403 ; 404) entre l'antenne (401) et
une ligne arrivée (107) ; et
le dispositif d'alimentation (402) présentant une jonction de guide d'ondes pour le découplage d'ondes électromagnétiques de la ligne d'arrivée dans le guide d'ondes, **caractérisé en ce que** la jonction de guide d'ondes comprend :
une carte imprimée (120), la carte imprimée (120) comprenant une première couche (104), une deuxième couche (105) et la ligne d'arrivée (107) sur le côté inférieur ou à l'intérieur de la deuxième couche (105) pour le guidage d'ondes électromagnétiques ;
une unité de découplage comprenant un élément de couplage (121) et une cavité résonante (102) pour le découplage des ondes électromagnétiques de la ligne d'arrivée (107) dans le guide d'ondes (103) ;
la cavité résonante (102) étant intégrée sous forme d'évidement dans la première couche (104) ;
la deuxième couche (105) présentant un matériau isolant ;
la première couche (104) se composant d'un matériau isolant et une métallisation (106), en forme d'une troisième couche, étant prévue sur un côté inférieur de la première couche (104), laquelle métallisation sert de surface de masse pour la ligne d'arrivée (107) et de paroi de guide d'ondes dans la cavité résonante (102) et est disposée entre la première couche (104) et la deuxième couche (105) ;
la deuxième couche (105) étant disposée au-dessous de la première couche (104), de sorte qu'elle recouvre la cavité résonante (102).

2. Radar de niveau suivant la revendication 1, dans lequel la cavité résonante (102) présente une profondeur (112), qui correspond à une épaisseur (113) de la première couche (104).

3. Radar de niveau suivant l'une des revendications 1 à 2, dans lequel la deuxième couche (105) est un substrat à haute fréquence.

4. Radar de niveau suivant l'une des revendications 1 à 3, dans lequel la première couche (104) est un substrat à haute fréquence.

5. Radar de niveau suivant l'une des revendications 1 à 2, dans lequel la cavité résonante (102) est remplie d'un diélectrique.

6. Radar de niveau suivant l'une des revendications 1 à 5, dans lequel la deuxième couche (105) présente une traversée (301) dans la zone de l'unité de découplage, afin de créer une compensation de pression entre la cavité résonante (102) et l'environnement.

7. Radar de niveau suivant l'une des revendications 1 à 6, dans lequel la ligne d'arrivée (107) est intégrée essentiellement dans la deuxième couche (105).

8. Radar de niveau suivant l'une des revendications précédentes, dans lequel la ligne d'arrivée (107) est réalisée sous forme de microbande.

9. Radar de niveau suivant l'une des revendications précédentes, dans lequel
la ligne d'arrivée (107) est réalisée pour le guidage d'ondes électromagnétiques d'une fréquence comprise entre 60 gigahertz et 100 gigahertz ; et
l'unité de découplage est réalisée pour le découplage des ondes électromagnétiques, d'une fréquence comprise entre 60 gigahertz et 100 gigahertz, de la ligne d'arrivée dans le guide d'ondes (103).

10. Radar de niveau suivant l'une des revendications précédentes, dans lequel le guide d'ondes (103) est assemblé par un moyen de fixation (110 ; 111) avec la carte imprimée (120) de telle sorte que les ondes électromagnétiques (403 ; 404) peuvent être découplées de la ligne d'arrivée (107) dans le guide d'ondes (103) par l'intermédiaire de l'unité de découplage, comprenant le résonateur (102) et l'élément de couplage (121).

11. Radar de niveau suivant l'une des revendications précédentes, dans lequel la jonction de guide d'ondes est fabriquée intégralement dans un processus de fabrication de platine.
